# EUROPÄISCHE PATENTSCHRIFT

(11) **EP 3 206 984 B1**
(45) Veröffentlichungstag und Bekanntmachung des Hinweises auf die Patenterteilung: **01.08.2018**
(21) Anmeldenummer: 14783657.1
(22) Anmeldetag: 13.10.2014
(51) Int. Cl.: B66C 1/02, B60S 5/06

(54) **BATTERIEGREIFER**
BATTERY GRIPPER
DISPOSITIF DE PRÉHENSION DE BATTERIES

(43) Veröffentlichungstag der Anmeldung: 23.08.2017
(73) Patentinhaber: J. Schmalz GmbH, 72293 Glatten (DE)
(72) Erfinder: MUELLER, Benedikt, 72160 Horb-Dettlingen (DE); STEINBACH, Andreas, 72280 Dornstetten (DE); PAUL, Norman, 72250 Freudenstadt (DE)
(74) Vertreter: DREISS Patentanwälte PartG mbB
(86) Internationale Anmeldenummer: PCT/EP2014/071912
(87) Internationale Veröffentlichungsnummer: WO 2016/058629

(56) Entgegenhaltungen:
- CA-A1- 2 093 531
- DE-A1-102011 006 271
- JP-A- S 591 185
- US-A- 5 707 094
- DATABASE WPI Week 201417 Thomson Scientific, London, GB; AN 2014-E05991 XP002742949, -& CN 103 481 289 A (HEFEI EAGLE AUTOMATION ENG TECHNOLOGY CO) 1. Januar 2014 (2014-01-01)
- DATABASE WPI Week 201406 Thomson Scientific, London, GB; AN 2014-B63431 XP002742950, -& CN 103 406 911 A (ZHEJIANG BUDA TECHNOLOGY CO LTD) 27. November 2013 (2013-11-27)

## Beschreibung

Die Erfindung betrifft einen Batteriegreifer zum Ansaugen und Handhaben von Starterbatterien, insbesondere zum Ansaugen und Handhaben von Starterbatterien von Kraftfahrzeugen. Die Erfindung betrifft ferner ein Greifsystem umfassend einen Schlauchheber, eine Bedienvorrichtung für einen Schlauchheber, wenigstens eine erste Unterdruckquelle und einen solchen Batteriegreifer.

Üblicherweise weisen Unterdruckgreifer ein Gehäuse auf, in dem eine mit Unterdruck beaufschlagbare Unterdruckkammer vorgesehen ist, wobei das Gehäuse an seiner dem Werkstück zugewandten Saugseite Saugöffnungen mit einem Saugquerschnitt aufweist, wobei der Saugseite ein flexibler Belag zugeordnet ist, der an das Werkstück angelegt wird.

Derartige Unterdruckgreifer können insbesondere zum Ergreifen oder Anheben von Gegenständen, wie beispielsweise lagestabilen Flachmaterialien, wie z.B. Brettern oder Platten oder von kleineren Gegenständen wie Dosen, Bechern, Schalen oder dergleichen genutzt werden. Dazu weisen die Unterdruckgreifer den flexiblen Belag auf, der an eine Oberseite der zu greifenden Gegenstände angelegt wird.

Aufgrund des steigenden Energiebedarfs in Kraftfahrzeugen und der immer weiter verbreiteten Start-Stopp-Systeme werden die Starterbatterien in Kraftfahrzeugen immer größer und somit auch schwerer. Daher nimmt auch die körperliche Belastung von Menschen beim Umsetzen oder Bewegen der Starterbatterien in der Automobilherstellung bzw. im automobilnahen Gewerbe zu.

Die Starterbatterien haben wegen ihres Aufbaus eine sehr hohe Dichte und sind daher oft schwer. Darüber hinaus weisen die Oberflächen der Starterbatterien üblicherweise keine durchgängig glatte Außenkontur auf, so dass Störkonturen ein Ansaugen bzw. Greifen von Starterbatterien erschweren.

In der Regel werden Starterbatterien auf Paletten oder in Boxen gelagert, wobei aufgrund einer hohen Packungsdichte ein Eingreifen in Zwischenräume zwischen den Starterbatterien nur erschwert möglich ist. Daher werden Starterbatterien bislang manuell mittels eines Hakens oder Greifers so umgesetzt, dass ein Greifen der Starterbatterien von der Batterieseite ermöglicht wird. Hierzu ist jedoch zunächst ein manuelles Verrutschen der Starterbatterien notwendig.

Das Dokument CN 103481289 A offenbart einen Batteriegreifer zum Ansaugen von Starterbatterien, der eine seitliche Saugseite mit Saugöffnungen und einem flexiblen Belag aufweist.

Das Dokument CN 103406911 A offenbart einen anderen Batteriegreifer zum Ansaugen von Starterbatterien, der seitliche und obere Saugnäpfe aufweist.

Bei beiden Greifern kann das Ansaugen nur erfolgen, wenn Zwischenräume zwischen den gelagerten Batterien vorhanden sind.

Die Erfindung liegt daher die Aufgabe zugrunde, einen Batteriegreifer bereitzustellen, mit dem es möglich ist, eine Starterbatterie eines Kraftfahrzeugs von einer Batterieoberseite anzusaugen, wobei der Batteriegreifer einfach herstellbar sein soll und wobei die Starterbatterien zuverlässig und sicher gegriffen werden sollen.

Diese Aufgabe wird durch einen Batteriegreifer mit den Merkmalen des Anspruchs 1 gelöst. Ein derartiger Batteriegreifer, zum Ansaugen und Handhaben von Starterbatterien von insbesondere Kraftfahrzeugen, weist ein Gehäuse auf, in welchem eine mit Unterdruck beaufschlagbare Unterdruckkammer vorgesehen ist und das an seiner der anzusaugenden Starterbatterie zugewandten Saugseite Saugöffnungen aufweist, wobei der Saugseite ein flexibler Belag zur Anlage an der Starterbatterie zugeordnet ist, wobei die Saugseite und/oder der flexible Belag (82)einen T-förmigen Querschnitt aufweist, wobei der Querschnitt einen Balkenabschnitt und einen sich quer von dem Balkenabschnitt erstreckenden Stegabschnitt derart aufweist, dass sich der Stegabschnitt bei am Batteriegreifer angesaugter Starterbatterie zwischen den Batteriepolen der Starterbatterie erstreckt. Dies ist besonders vorteilhaft, da beim Ansetzen des Batteriegreifers ein gleichzeitiges Berühren der Batteriepole der handzuhabenden Starterbatterie vermieden werden kann. Somit kann in vorteilhafter Weise ein Kurzschluss vermieden werden. Dabei ist es denkbar, dass nur die Saugseite und/oder der flexible Belag einen T-förmigen Querschnitt aufweist, wobei es auch möglich ist, dass das gesamte Gehäuse des Batteriegreifers einen parallel zur Saugseite verlaufenden T-förmigen Querschnitt aufweist.

Ferner ist es möglich, dass eine Schürze und/oder ein Vorhang zur Unterdruckabdichtung am Batteriegreifer vorgesehen ist. Besonders bevorzugt ist es dabei, wenn die Schürze und/oder der Vorhang mantelseitig am Batteriegreifer angeordnet ist und sich in Richtung einer anzusaugenden und/oder handzuhabenden Starterbatterie erstreckt.

Eine erste vorteilhafte Weiterbildung des Batteriegreifers sieht vor, dass die Saugöffnungen derart ausgebildet sind, dass deren Anzahl, Öffnungsquerschnitt und/oder Geometrie an eine Batterieoberfläche einer anzusaugenden Starterbatterie angepasst ist. Dabei ist es besonders bevorzugt, wenn die Anzahl, Öffnungsquerschnitte und/oder die Geometrie so gewählt ist, dass eine Leckagewahrscheinlichkeit der anzusaugenden Batterieoberseite angepasst ist. Wenn eine Leckage wahrscheinlich ist, d.h. bei unebenen Bereichen der Batterieoberseite, ist es vorteilhaft wenn Saugöffnungen mit einem kleineren Öffnungsquerschnitt in einer geringen Anzahl vorgesehen sind, wobei in Bereichen, in denen eine Leckage eher unwahrscheinlich ist, d.h. in ebenen Bereichen Saugöffnungen mit einem größeren Öffnungsquerschnitt in einer größeren Anzahl vorgesehen sein können.

Weiterhin ist es vorteilhaft, wenn Saugöffnungen mit wenigstens zwei verschiedenen Öffnungsquerschnitten vorgesehen sind, wobei ein erster Öffnungsquerschnitt kleiner als ein zweiter Öffnungsquerschnitt ist. Vorzugsweise sind die Saugöffnungen dabei derart angeordnet, dass im Bereich einer unebenen Batterieoberseite bevorzugt Saugöffnungen mit dem ersten Öffnungsquerschnitt vorgesehen sind wobei im Bereich einer ebenen oder nahezu ebenen Batterieoberseite bevorzugt Saugöffnungen mit dem zweiten Öffnungsquerschnitt vorgesehen sind. Vorteilhafterweise sind die Öffnungsquerschnitte bzw. Durchmesser und die Anordnung oder Lage der Saugöffnungen derart gewählt, dass die Leckagewahrscheinlichkeit der anzusaugenden Batterieoberseite angepasst ist. Wenn eine Leckage wahrscheinlich ist, d.h. bei unebenen Bereichen der Batterieoberseite, ist es vorteilhaft wenn Saugöffnungen mit dem ersten Öffnungsquerschnitt in einer geringen Anzahl vorgesehen sind, wobei in Bereichen, in denen eine Leckage eher unwahrscheinlich ist, d.h. in ebenen Bereichen Saugöffnungen mit dem zweiten Öffnungsquerschnitt in einer größeren Anzahl vorgesehen sein können.

Besonders bevorzugt ist es dabei, wenn die Saugseite in Richtung des Balkenabschnitts drei Saugabschnitte aufweist, wobei in einem Mittelsaugabschnitt etwa gleichviele Saugöffnungen mit dem ersten und dem zweiten Öffnungsquerschnitt angeordnet sind und wobei in zwei außerhalb des Mittelsaugabschnitts angeordneten Endsaugabschnitten ausschließlich oder überwiegend Saugöffnungen mit dem zweiten Öffnungsquerschnitt angeordnet sind. Unter einer überwiegenden Anzahl von Saugöffnungen mit dem zweiten Öffnungsquerschnitt wird dabei eine Anzahl von über 80% der im jeweiligen Saugabschnitt vorhandenen Saugöffnungen verstanden.

Eine besonders vorteilhafte Weiterbildung des Batteriegreifers sieht dabei vor, dass der Mittelsaugabschnitt einen Zentralsaugabschnitt aufweist, wobei im Zentralsaugabschnitt ausschließlich Saugöffnungen mit dem ersten Öffnungsquerschnitt angeordnet sind und wobei der Mittelsaugabschnitt neben dem Zentralsaugabschnitt zwei an die Endsaugabschnitte angrenzende Übergangssaugabschnitte aufweist, wobei in den Übergangssaugabschnitten ausschließlich oder überwiegend Saugöffnungen mit dem zweiten Öffnungsquerschnitt angeordnet sind. Unter einer überwiegenden Anzahl von Saugöffnungen mit dem zweiten Öffnungsquerschnitt wird dabei eine Anzahl von über 80% der im jeweiligen Saugabschnitt vorhandenen Saugöffnungen verstanden.

Weiterhin ist es vorteilhaft, wenn die Saugseite einen umlaufenden Randsaugabschnitt aufweist, wobei in dem Randsaugabschnitt ausschließlich oder überwiegend Saugöffnungen mit dem ersten Öffnungsquerschnitt angeordnet sind. Unter einer überwiegenden Anzahl von Saugöffnungen mit dem ersten Öffnungsquerschnitt wird dabei eine Anzahl von über 80% der im jeweiligen Saugabschnitt vorhandenen Saugöffnungen verstanden.

Eine weitere vorteilhafte Ausgestaltung des Batteriegreifers sieht vor, dass im flexiblen Belag zylindrische Ausnehmungen vorgesehen sind, die den flexiblen Belag durchdringen, wobei die Saugöffnungen in die Ausnehmungen münden und wobei die Größe der Ausnehmungen mit der Größe der Saugöffnungen korrespondiert.

Besonders bevorzugt ist es dabei, wenn die Ausnehmungen derart ausgebildet sind, dass deren Anzahl, Grundfläche, Geometrie und/oder Tiefe an eine Batterieoberfläche einer anzusaugenden Starterbatterie angepasst ist. Dabei ist es besonders bevorzugt, wenn die Anzahl, Grundfläche, Geometrie und/oder Tiefe so gewählt ist, dass eine Leckagewahrscheinlichkeit der anzusaugenden Batterieoberseite angepasst ist. Wenn eine Leckage wahrscheinlich ist, d.h. bei unebenen Bereichen der Batterieoberseite, ist es vorteilhaft wenn Ausnehmungen mit einer kleineren Grundfläche in einer geringen Anzahl vorgesehen sind, wobei in Bereichen, in denen eine Leckage eher unwahrscheinlich ist, d.h. in ebenen Bereichen Ausnehmungen mit einer größeren Grundfläche in einer größeren Anzahl vorgesehen sein können.

Vorteilhafterweise münden Saugöffnungen mit einem größeren Öffnungsquerschnitt in Ausnehmungen mit einem größeren Ausnehmungsquerschnitt bzw. einer größeren Grundfläche und Saugöffnungen mit einem kleineren Öffnungsquerschnitt in Ausnehmungen mit einem kleineren Ausnehmungsquerschnitt bzw. einer kleineren Grundfläche. Vorteilhafterweise verlaufen die zylindrischen Ausnehmungen senkrecht zur Saugseite. Das Vorsehen der Ausnehmungen im flexiblen Belag ist besonders vorteilhaft, da die Ausnehmungen als Vakuumwirkkammern fungieren können.

Weiterhin ist es vorteilhaft, wenn die zylindrischen Ausnehmungen eine kreisförmige oder langlochartige Grundfläche aufweisen. Bei Ausnehmungen mit langlochartiger Grundfläche ist es dabei besonders bevorzugt wenn zwei Saugöffnungen, die den zweiten Öffnungsquerschnitt aufweisen, der jeweiligen langlochartigen Grundfläche bzw. der jeweiligen Ausnehmung zugeordnet sind. Besonders bevorzugt ist es dabei ferner, wenn die Saugöffnungen in den jeweiligen halbkreisförmigen Endbereichen der langlochartigen Grundfläche angeordnet sind. Vorteilhafterweise ist die langlochartige Grundfläche größer als die kreisförmige Grundfläche ausgebildet, so dass Ausnehmungen mit langlochartiger Grundfläche einen größeren Ausnehmungsquerschnitt als Ausnehmungen mit kreisförmiger Grundfläche aufweisen. Bei Ausnehmungen mit kreisförmiger Grundfläche ist vorzugsweise koaxial zur kreisförmigen Grundfläche eine Saugöffnung angeordnet, die den ersten Öffnungsquerschnitt aufweist.

Eine weitere vorteilhafte Ausgestaltung des Batteriegreifers sieht vor, dass der Batteriegreifer einen Kupplungsabschnitt zum Anschluss an einen Schlauchheber aufweist, wobei der Kupplungsabschnitt eine Öffnung aufweist, die in die Unterdruckkammer mündet und wobei der Kupplungsabschnitt gleichmäßig um die Öffnung angeordnete Verriegelungszapfen aufweist.

Durch Vorsehen eines derartigen Kupplungsabschnitts ist es möglich, den Batteriegreifer mit einem Schlauchheber bzw. mit einer Bedienvorrichtung für einen Schlauchheber zu verbinden. Besonders bevorzugt ist es, wenn der Batteriegreifer mit einer Bedienvorrichtung für einen Schlauchheber verbindbar ist, wobei die Bedienvorrichtung vorzugsweise einen Pistolengriff aufweist und mittels des Kupplungsabschnitts mit dem Batteriegreifer verbunden werden kann. Zur Kopplung des Batteriegreifers mit einer Bedienvorrichtung für einen Schlauchheber können die Verriegelungszapfen bajonettartig in Aufnahmeöffnungen der Bedienvorrichtung eingreifen. Eine Einhandbedienung des Batteriegreifers mittels des Pistolengriffs kann so ermöglicht werden.

Besonders bevorzugt ist es ferner, wenn die Öffnung auf der der Saugseite abgewandten Seite angeordnet ist, wobei sich die Mittellängsachse der Öffnung vorzugsweise senkrecht zur Saugseite durch einen Schwerpunkt des Batteriegreifers erstreckt. Mittels der Öffnung ist der Anschluss einer Unterdruckquelle an den Batteriegreifer möglich. Dabei ist es denkbar, dass als Unterdruckquelle für den Batteriegreifer das Eigenvakuum bzw. die Unterdruckquelle des Schlauchhebers verwendet werden kann.

Eine besonders bevorzugte Weiterbildung des Batteriegreifers sieht vor, dass der flexible Belag ein Schaumstoffbelag ist.

Das Vorsehen eines Schaumstoffbelages als flexibler Belag hat sich als vorteilhaft erwiesen, da Schaumstoff einerseits besonders günstig ist und andererseits für den vorliegenden Zweck besonders geeignet ist, da er sich an die mitunter unebene Batterieoberseite gut an anschmiegt. Es ist jedoch auch denkbar statt eines Schaumstoffbelages einen anderen flexiblen Belag zu verwenden, bspw. irgendein Elastomer.

Eine weitere vorteilhafte Ausgestaltung des Batteriegreifers sieht vor, dass das Gehäuse an seiner der Saugseite abgewandten Seite eine Polmarkierung für einen Plus-Pol einer anzusaugenden Starterbatterie aufweist. Vorteilhafterweise ist die Polmarkierung der Plus-Pol-Seite rot, wobei eine Polmarkierung einer Minus-Pol-Seite vorzugsweise blau ausgebildet sein kann. Durch Vorsehen einer derartigen Polmarkierung der Batteriepole kann das Greifen bzw. Ansaugen und Handhaben einer Starterbatterie erleichtert werden. Das Bedienpersonal eines Batteriegreifers kann dann anhand der Polmarkierung erkennen, von welcher Batterieseite der Stegabschnitt zum Ansaugen oder Greifen der Starterbatterie zwischen die Batteriepole eingeführt werden muss.

Besonders bevorzugt ist es ferner, wenn das Gehäuse mantelseitig im Bereich des Stegabschnitts und auf der dem Stegabschnitt abgewandten Seite des Balkenabschnitts Mittenmarkierungen aufweist. Eine Mantelseite ist dabei eine quer zur Saugseite angeordnete, umlaufende Gehäuseseite. Durch Vorsehen der Mittenmarkierungen kann die Ausrichtung des Batteriegreifers zur mittigen Platzierung auf einer Batterieoberseite einer Starterbatterie genutzt werden.

Weiterhin ist es vorteilhaft, wenn mantelseitig Anschlagabschnitte vorgesehen sind, die sich von der Saugseite erheben. Durch Vorsehen der Anschlagabschnitte kann ein Anschlag für eine handzuhabende Starterbatterie bereitgestellt werden. Besonders bevorzugt ist dabei, wenn im Bereich einer Greifermitte am Stegabschnitt ein Anschlagabschnitt vorgesehen ist und wenn auf der dem Stegabschnitt abgewandten Seite des Balkenabschnitts außermittig zwei vorzugsweise spiegelbildlich zu einer Spiegelebene angeordnete Anschlagabschnitte vorgesehen sind.

Eine weitere vorteilhafte Ausgestaltung des Batteriegreifers sieht vor, dass eine mechanische Klemmvorrichtung zur seitlichen Klemmung einer zu handhabenden Starterbatterie vorgesehen ist. Dabei kann eine zusätzliche Greif- oder Haltemöglichkeit bereitgestellt werden, wobei es besonders bevorzugt ist, wenn eine Klemmung mittels der Klemmvorrichtung erst nach dem Ansaugen der Starterbatterie erfolgt.

Die eingangs genannte Aufgabe wird auch gelöst durch ein Greifsystem mit den Merkmalen des Anspruchs 14. Ein solches Greifsystem umfasst einen Schlauchheber, eine Bedienvorrichtung für einen Schlauchheber, wenigstens eine erste Unterdruckquelle und einen Batteriegreifer nach wenigstens einem der vorhergehenden Ansprüche, wobei die erste Unterdruckquelle fluidisch mit dem Schlauchheber verbunden ist. Es ist jedoch auch denkbar, statt eines Schlauchhebers eine andere Art von Hebehilfe vorzusehen, bspw. Kräne, Roboter oder dergleichen. Dabei kann vorgesehen sein, dass als Unterdruckquelle eine zentrale oder dezentrale Vakuumversorgung vorgesehen ist. Eine solche Unterdruckquelle kann elektrisch bspw. als Pumpe oder Gebläse angetrieben sein. Darüber hinaus ist auch eine pneumatische Unterdruckquelle in Form eines Ejektors denkbar. Die Unterdruckquelle kann bspw. unmittelbar am Batteriegreifer angeordnet sein, wobei es auch möglich ist, die Unterdruckquelle an der Hebehilfe anzuordnen und die Unterdruckquelle mittels dafür vorgesehener Unterdruckschläuche mit dem Batteriegreifer zu verbinden.

Vorzugsweise weist die Bedienvorrichtung dabei einen Gegenkupplungsabschnitt zur Verbindung mit dem Kupplungsabschnitt des Batteriegreifers auf, wobei es besonders bevorzugt ist wenn der Gegenkupplungsabschnitt einen Zentrierzapfen aufweist, der in die Öffnung des Kupplungsabschnitts einführbar ist. Ferner ist es vorteilhaft, wenn der Gegenkupplungsabschnitt Aufnahmeöffnungen zur Aufnahme der Verriegelungszapfen des Kupplungsabschnitts des Batteriegreifers aufweist. Durch bajonettartiges Verdrehen können Köpfe der Verriegelungszapfen in Aufnahmeöffnungen zur lösbaren Verbindung des Batteriegreifers mit der Bedienvorrichtung hintergriffen werden.

Besonders bevorzugt ist es, wenn die erste Unterdruckquelle fluidisch mit dem Batteriegreifer verbunden ist. Somit kann die Unterdruckquelle, welche bereits den Schlauchheber mit Unterdruck versorgt zur Unterdruckversorgung des Batteriegreifers vorgesehen sein.

Es ist jedoch auch denkbar, dass eine zweite Unterdruckquelle vorgesehen ist, die fluidisch mit dem Batteriegreifer verbunden ist. Somit kann eine Unterdruckversorgung des Batteriegreifers komplett unabhängig von der Unterdruckversorgung des Schlauchhebers realisiert werden.

Weitere Einzelheiten und vorteilhafte Ausgestaltungen der Erfindung sind der nachfolgenden Beschreibung zu entnehmen, anhand derer die in den Figuren dargestellte Ausführungsform näher beschrieben und erläutert ist.

Es zeigen:
Figur 1 Eine perspektivische Ansicht eines Greifsystems mit einem erfindungsgemäßen Batteriegreifer;
Figur 2 einen vergrößerten Abschnitt des Greifsystems gemäß Figur 1;
Figur 3 eine Seitenansicht auf das Greifsystem gemäß Figur 2;
Figur 4 eine Rückansicht auf das Greifsystem gemäß Figur 2;
Figur 5 eine perspektivische Ansicht des Greifsystems gemäß Figur 1 und 2 mit am Batteriegreifer angesaugter Starterbatterie eines Kraftfahrzeugs;
Figur 6 eine perspektivische Ansicht eines erfindungsgemäßen Batteriegreifers von oben;
Figur 7 eine perspektivische Ansicht eines erfindungsgemäßen Batteriegreifers von unten;
Figur 8 eine Unteransicht eines erfindungsgemäßen Batteriegreifers; und
Figur 9 eine perspektivische Unteransicht auf eine Bedienvorrichtung eines Greifsystems gemäß der Figuren 1 bis 5.

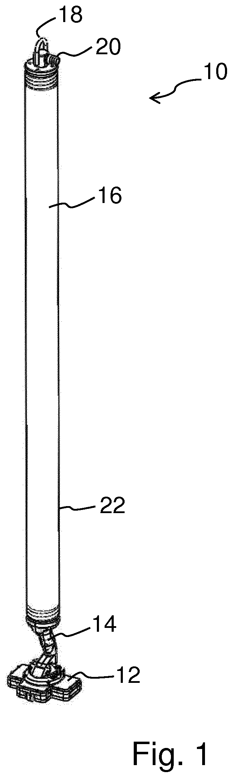

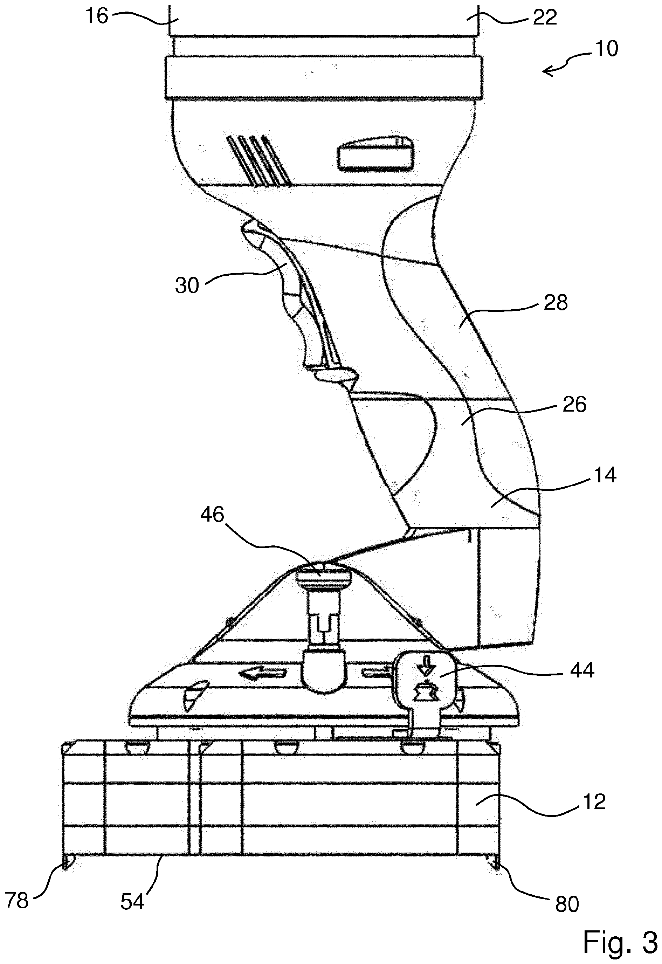

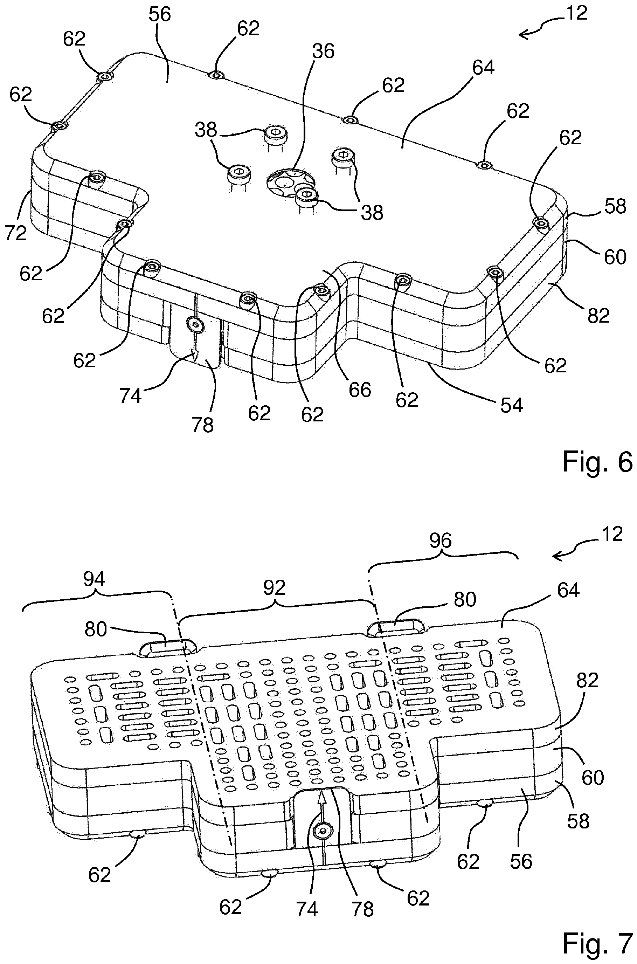

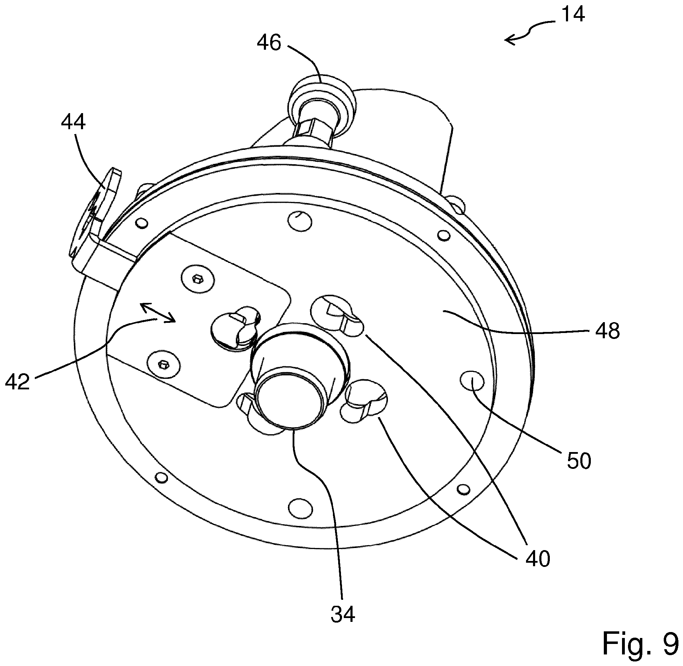

In den Figuren 1 bis 5 ist ein Greifsystem 10 umfassend einen erfindungsgemäßen Batteriegreifer 12 gezeigt, wobei die Figuren 6 bis 8 den Batteriegreifer 12 in Alleindarstellung zeigen. Figur 9 zeigt wiederum eine perspektivische Unteransicht auf eine Bedienvorrichtung 14 eines Greifsystems 10 gemäß den Figuren 1 bis 5.

Die Funktionsweise des Greifsystems 10 bzw. des Batteriegreifers 12 wird unter Bezugnahme auf die Figuren 1 bis 9 insgesamt beschrieben und erläutert.

Figur 1 zeigt in perspektivischer Ansicht das insgesamt mit 10 bezeichnete Greifsystem. Das Greifsystem 10 umfasst die Bedienvorrichtung 14 für einen Schlauchheber 16, wobei der Schlauchheber 16 mittels einer Öse 18 an einer nicht dargestellten Deckenbefestigung befestigt werden kann. Der Schlauchheber 16 weist ferner im Bereich der Öse 18 einen Unterdruckanschluss 20 auf, mittels dem der Schlauchheber 16 mit einer in den Figuren nicht gezeigten Unterdruckquelle verbunden werden kann.

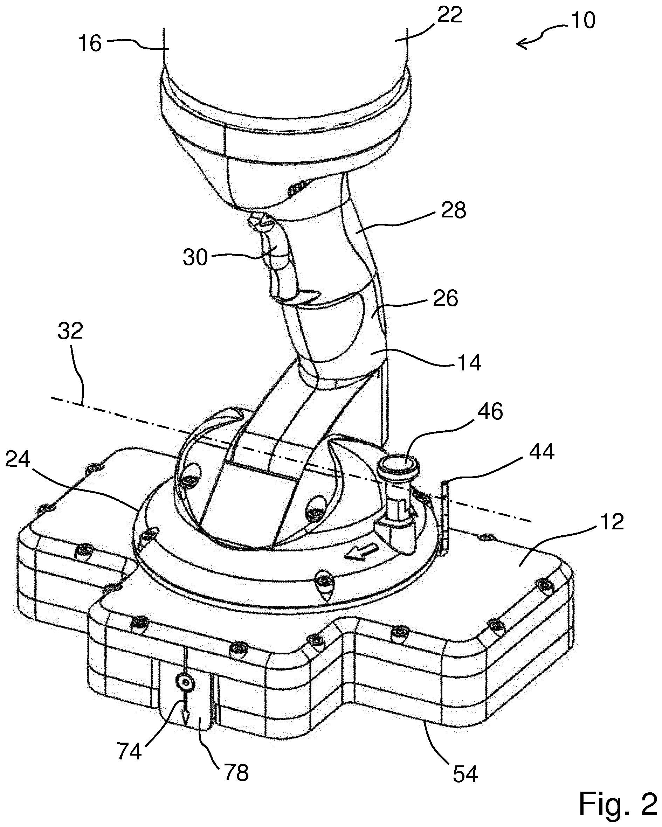

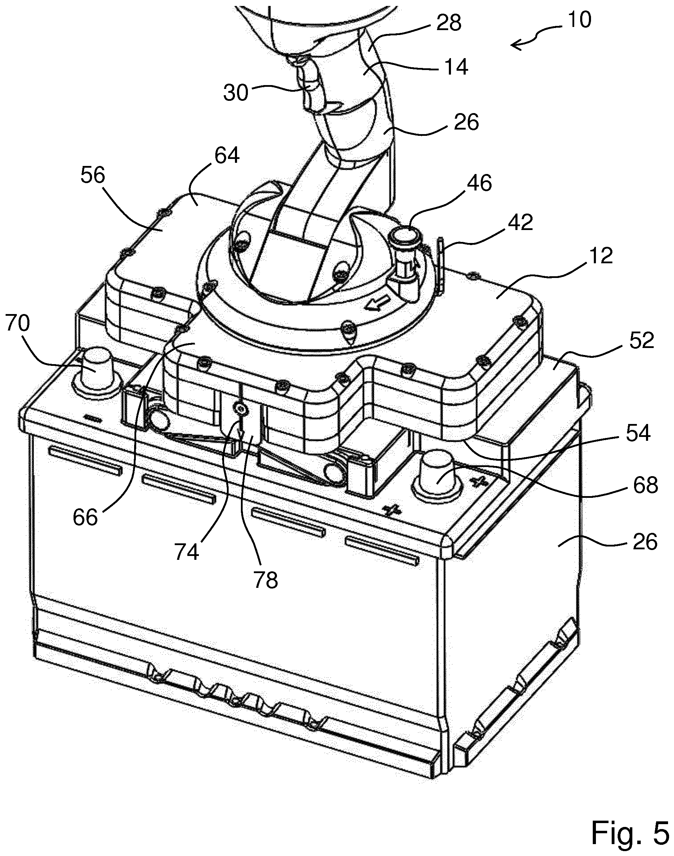

Figur 2 zeigt einen vergrößerten Ausschnitt des Greifsystems 10 gemäß Figur 1. Dabei ist deutlich zu erkennen, dass die Bedienvorrichtung 14 eine Anschlussvorrichtung für einen Hubschlauch 22 des Schlauchhebers 16 aufweist. Mittels dieses Hubschlauchs 22 wird, wie allgemein bekannt, die Bedienvorrichtung 14 mit Unterdruck versorgt und dabei durch Verkürzung oder Längung des Hubschlauchs 22 angehoben beziehungsweise abgesenkt. An der Unterseite der Bedienvorrichtung 14 befindet sich eine Kupplung 24, an welcher der Batteriegreifer 12 befestigt ist. Mittels dieses Batteriegreifers 12 kann eine Starterbatterie 26 eines Kraftfahrzeugs, wie in Figur 5 gezeigt, angesaugt und dadurch ergriffen werden, so dass durch anschließende Verkürzung des Hubschlauchs 22 die Starterbatterie 26 angehoben werden kann. Der zwischen der Anschlussvorrichtung und der Kupplung 24 sich befindende Abschnitt ist nach Art eines Pistolengriffs 26 ausgebildet, so dass er mit einer Hand, also einhändig ergriffen und betätigt werden kann. Dabei liegt der Handballen an einer aufclipsbaren Auflage 28 auf, die aus einem relativ weichen Material, z. B. Gummi oder Silikonkautschuk besteht, so dass ein ermüdungsfreies Arbeiten möglich ist. Mit dem Zeigefinger wird ein Abzug 30 betätigt, der seinerseits ein in den Pistolengriff 26 integriertes in den Figuren nicht gezeigtes Belüftungsventil aktiviert.

Die Kupplung 24 ist um eine horizontale Achse 32 schwenkbar, so dass der Batteriegreifer 12 zum Ansetzen an eine Starterbatterie 26 um die horizontale Achse 32 verschwenkt werden kann. Wie in Figur 9 erkennbar, weist die Kupplung 24 einen Zentrierzapfen 34 auf, der in eine zentrale Öffnung 36 des Batteriegreifers 12 eingreift, die insbesondere in Figur 6 deutlich zu erkennen ist. Mittels des Zentrierzapfens 34 kann eine Unterdruckversorgung einer in den Figuren nicht gezeigten Unterdruckkammer des Batteriegreifers 12 bereitgestellt werden. Der Batteriegreifer 12 selbst besitzt, wie ebenfalls in Figur 6 zu erkennen ist, vier gleichmäßig um die Öffnung 36 angeordnete Verriegelungszapfen 38, die in schlüssellochartige Aufnahmeöffnungen 40 an der Unterseite der Kupplung 24 eingreifen. Durch bajonettartiges Verdrehen des Batteriegreifers 12 wird der Kopf eines jeden Verriegelungszapfens 38 in den Aufnahmeöffnungen 40 hintergriffen. Die Sicherung dieser Verriegelungsposition erfolgt über ein Sicherungsblech 42, welches zur Entriegelung entgegen einer Federkraft radial an einer Lasche 44 herausgezogen werden kann. In der radial inneren Position (Verriegelungsposition) hintergreift das Sicherungsblech 42 geringfügig eine Aufnahmeöffnung 40, so dass der Kopf des sich dort befindenden Verriegelungszapfens 38 nicht aus der Aufnahmeöffnung 40 herausgezogen werden kann.

Außerdem ist ein Verriegelungsstift 46 erkennbar, der in Richtung einer Längsachse 47 der Bedienvorrichtung 14 entgegen einer Rückstellkraft aus der Kupplung 24 teilweise herausgezogen werden kann. Dadurch wird die die Aufnahmeöffnungen 40 aufweisende Kupplungsplatte 48 entriegelt, so dass diese um die Längsachse 47 gedreht werden kann. Durch Umlegen des teilweise herausgezogenen Verriegelungsstifts 46 wird eine Wiederverriegelung verhindert. Im Übrigen weist die Verriegelungsplatte 48 vier gleichmäßig über den Umfang verteilt angeordnete Aufnahmen 50 für den Verriegelungsstift 46 auf, so dass vier definierte Drehpositionen eingenommen werden können.

Die Funktionsweise des Batteriegreifers 12 wird anhand der Figuren 5 bis 8 näher beschrieben und erläutert.

Wie in Figur 5 zweifelsfrei zu erkennen ist, ist vom Batteriegreifer 12 des Greifsystems 10 eine Starterbatterie 26 an ihrer Batterieoberseite 52 angesaugt.

Hierzu weist der Batteriegreifer 12 eine der anzusaugenden Batterieoberseite 52 der Starterbatterie 26 zugewandte Saugseite 54 auf. Der Batteriegreifer 12 weist ferner ein Gehäuse 56 auf, wobei das Gehäuse 56, wie in Figur 6 und 7 gezeigt, ein Gehäuseoberteil 58 und ein Gehäuseunterteil 60 aufweist, wobei die Saugseite 54 auf der Seite des Gehäuseunterteils 60 angeordnet ist.

Das Gehäuseoberteil 58 und das Gehäuseunterteil 60 sind durch insgesamt 13 Verbindungsschrauben 62 miteinander verschraubt. Insgesamt weist das Gehäuse 56 einen parallel zur Saugseite 54 verlaufenden T-förmigen Querschnitt auf, wobei der Querschnitt bzw. das Gehäuse 56 einen Balkenabschnitt 64 und einen sich quer bzw. senkrecht von dem Balkenabschnitt 64 erstreckenden Stegabschnitt 66 aufweist. Der Stegabschnitt 66 ist dabei so ausgebildet, dass er sich, wie in Figur 5 deutlich zu erkennen ist, bei am Batteriegreifer 12 angesaugter Starterbatterie 26 zwischen einem Pluspol 68 und einem Minuspol 70 der Starterbatterie 26 erstreckt, so dass ein Kurzschluss der Starterbatterie 26 vermieden werden kann.

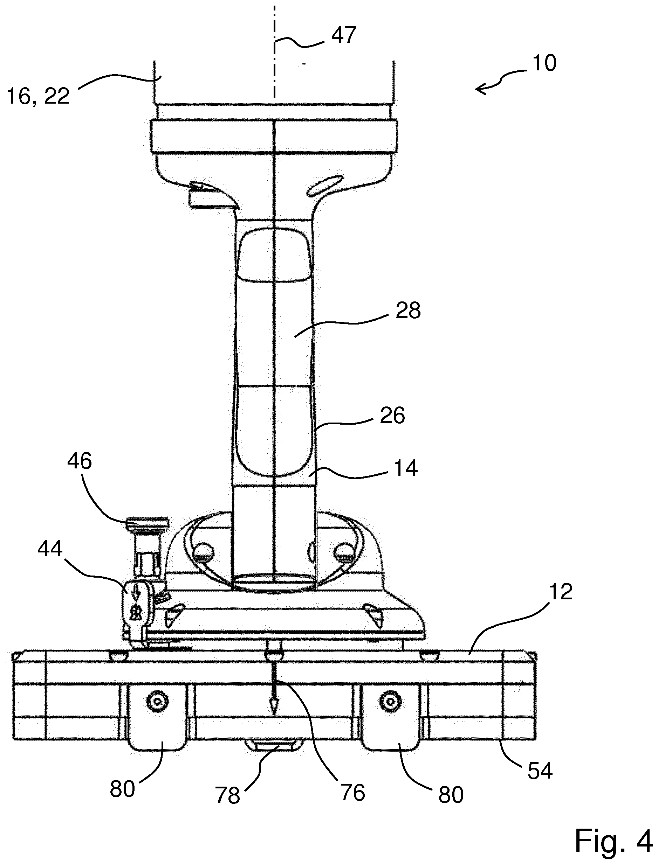

Zur Positionierung des Batteriegreifers 12 auf einer Starterbatterie 26 weist das Gehäuse 56 eine in den Figuren nicht dargestellte Markierung für den Pluspol 68 der Starterbatterie 26 auf. Ferner weist das Gehäuse 56 an einer umlaufenden Mantelseite 72 im Bereich einer Greifermitte am Stegabschnitt 66 eine Mittenmarkierung 74 auf. Darüber hinaus weist das Gehäuse 56 auf der dem Stegabschnitt 66 abgewandten Seite des Balkenabschnitts 64 im Bereich der Greifermitte eine Mittenmarkierung 76 auf, die in Figur 4 zu erkennen ist.

Um den Batteriegreifer 12 möglichst einfach positionieren zu können ist im Bereich der Greifermitte am Stegabschnitt 66 ferner ein Anschlagabschnitt 78 vorgesehen, der sich von der Saugseite 54 erhebt. Ferner sind auf der dem Stegabschnitt 66 abgewandten Seite des Balkenabschnitts 64 außermittig zwei spiegelbildlich zu einer Spiegelebene angeordnete Anschlagabschnitte 80 vorgesehen, die sich ebenfalls von der Saugseite 54 erheben.

Auf der Saugseite 54 ist ein flexibler Belag in Form einer Schaumstoffschicht 82 angeordnet, der an die Starterbatterie 26 angelegt wird. Als flexibler Belag ist die Schaumstoffschicht 82 gewählt, da sich Schaumstoff an die mitunter unebene Batterieoberseite 52 gut an anschmiegt.

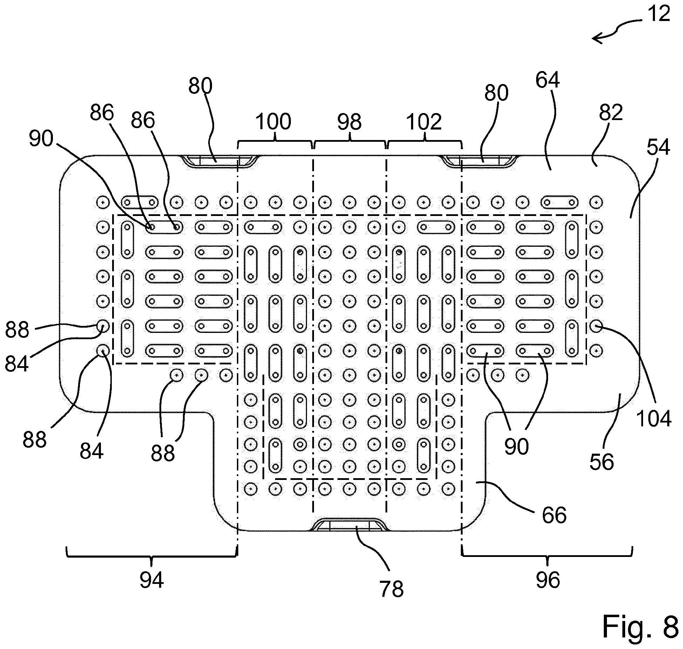

Wie insbesondere den Figuren 7 und 8 zu entnehmen ist, weist das Gehäuse 56 an der Saugseite 54 Saugöffnungen 84 mit einem ersten Öffnungsquerschnitt sowie Saugöffnungen 86 mit einem zweiten Öffnungsquerschnitt auf. Der erste Öffnungsquerschnitt der Saugöffnungen 84 ist dabei kleiner als der Öffnungsquerschnitt der Saugöffnungen 86. Diese Saugöffnungen 84, 86 münden in zylindrische Ausnehmungen 88, 90 der Schaumstoffschicht 82. Die Ausnehmungen 88, 90 durchdringen die Schaumstoffschicht 82 vollständig, wobei die Ausnehmungen 88 eine kreisförmige Grundfläche aufweisen und wobei die Ausnehmungen 90 eine langlochartige Grundfläche aufweisen. Die langlochartige Grundfläche der Ausnehmungen 90 ist dabei größer als die kreisförmige Grundfläche der Ausnehmungen 88. Bei den Ausnehmungen 88 mit kreisförmiger Grundfläche ist der jeweiligen Ausnehmung 88 eine Saugöffnung 84 mit dem ersten Öffnungsquerschnitt zugeordnet und koaxial zur kreisförmigen Grundfläche der Ausnehmung 88 angeordnet.

Bei den Ausnehmungen 90 mit langlochartiger Grundfläche sind der jeweiligen Ausnehmung 90 jeweils zwei Saugöffnungen 86 mit dem zweiten Öffnungsquerschnitt zugeordnet und jeweils in den halbkreisförmigen Endbereichen der langlochartigen Grundfläche der Ausnehmungen 90 angeordnet.

Wie in Figur 7 zu erkennen ist, weist die Saugseite 54 in Richtung des Balkenabschnitts 64 drei Saugabschnitte 92, 94, 96 auf. Ein Mittelsaugabschnitt 92 ist mittig in der Saugseite 54 vorgesehen, wobei außerhalb des Mittelsaugabschnitts 92 zwei Endsaugabschnitte 94, 96 angeordnet sind. Im Mittelsaugabschnitt 92 sind etwa gleich viele Saugöffnungen 84, 86 mit dem ersten und dem zweiten Öffnungsquerschnitt vorgesehen, wobei auch eine entsprechende Anzahl der Ausnehmungen 88 mit kreisförmiger Grundfläche und der Ausnehmungen 90 mit langlochartiger Grundfläche vorgesehen sind. In den Endsaugabschnitten 94, 96 sind dabei ausschließlich Saugöffnungen 86 mit dem zweiten Öffnungsquerschnitt und Ausnehmungen 90 mit der langlochartigen Grundfläche angeordnet.

Wie sich insbesondere der Unteransicht gemäß Figur 8 entnehmen lässt, ist der Mittelsaugabschnitt 92 ferner in einen Zentralsaugabschnitt 98, sowie zwei an die Endsaugabschnitte 94, 96 angrenzende Übergangssaugabschnitte 100, 102 aufgeteilt. Im Bereich des Zentralsaugabschnitts 98 sind ausschließlich Saugöffnungen 84 mit dem ersten Öffnungsquerschnitt und Ausnehmungen 88 mit kreisförmiger Grundfläche angeordnet, wobei in den Übergangssaugabschnitte 100, 102 ausschließlich oder überwiegend Saugöffnungen 86 mit dem zweiten Öffnungsquerschnitt und Ausnehmungen 90 mit der langlochartigen Grundfläche angeordnet sind.

Ferner weist die Saugseite 54 einen in Figur 8 durch eine gestrichelte Linie abgegrenzten Randsaugabschnitt 104 auf, wobei in dem Randsaugabschnitt 104 ausschließlich oder überwiegend Saugöffnungen 84 mit dem ersten Öffnungsquerschnitt und Ausnehmungen 88 mit der kreisförmigen Grundfläche angeordnet sind.

Die Anordnung der Saugöffnungen 84, 86 sowie der Ausnehmungen 88, 90 ist dabei derart, dass eine Anpassung an einer Batterieoberseite 52 so erfolgen kann, dass bei unebenen Abschnitten der Batterieoberseite 52 Saugöffnungen 84 mit dem kleineren ersten Öffnungsquerschnitt und Ausnehmungen 88 mit der kleineren kreisförmigen Grundfläche vorgesehen sind, wobei bei ebenen Abschnitten der Batterieoberseite 52 Saugöffnungen 86 mit dem größeren zweiten Öffnungsquerschnitt und Ausnehmungen 90 mit der größeren langlochartigen Grundfläche vorgesehen sind, so dass eine Leckage aufgrund von Unebenheiten der Batterieoberseite minimiert werden kann.

## Patentansprüche

1. Batteriegreifer (12), zum Ansaugen und Handhaben von Starterbatterien (26) von insbesondere Kraftfahrzeugen, mit einem Gehäuse (56), in welchem eine mit Unterdruck beaufschlagbare Unterdruckkammer vorgesehen ist und das an seiner der anzusaugenden Starterbatterie (26) zugewandten Saugseite (54) Saugöffnungen (84, 86) aufweist, wobei der Saugseite (54) ein flexibler Belag (82) zur Anlage an der Starterbatterie (26) zugeordnet ist, wobei die Saugseite (54) und/oder der flexible Belag (82) T-förmigen Querschnitt aufweist, wobei der Querschnitt einen Balkenabschnitt (64) und einen sich quer von dem Balkenabschnitt (64) erstreckenden Stegabschnitt (66) derart aufweist, dass sich der Stegabschnitt (66) bei am Batteriegreifer (66) angesaugter Starterbatterie (26)zwischen den Batteriepolen (68, 70) der Starterbatterie (26) erstreckt.

2. Batteriegreifer (12) nach Anspruch 1, **dadurch gekennzeichnet, dass** die Saugöffnungen (84, 86) derart ausgebildet sind, dass deren Anzahl, Öffnungsquerschnitt und/oder Geometrie an eine Batterieoberfläche einer anzusaugenden Starterbatterie (26) angepasst ist.

3. Batteriegreifer nach Anspruch 1 oder 2, **dadurch gekennzeichnet, dass** Saugöffnungen (84, 86) mit wenigstens zwei verschiedenen Öffnungsquerschnitten vorgesehen sind, wobei ein erster Öffnungsquerschnitt kleiner als ein zweiter Öffnungsquerschnitt ist.

4. Batteriegreifer (12) nach Anspruch 3, **dadurch gekennzeichnet, dass** die Saugseite (54) in Richtung des Balkenabschnitts (64) drei Saugabschnitte (92, 94, 96) aufweist, wobei in einem Mittelsaugabschnitt (92) etwa gleichviele Saugöffnungen (84, 86) mit dem ersten und dem zweiten Öffnungsquerschnitt angeordnet sind und wobei in zwei außerhalb des Mittelsaugabschnitts (92) angeordneten Endsaugabschnitten (94, 96) ausschließlich Saugöffnungen (86) mit dem zweiten Öffnungsquerschnitt angeordnet sind.

5. Batteriegreifer (12) nach Anspruch 4, **dadurch gekennzeichnet, dass** der Mittelsaugabschnitt (92) einen Zentralsaugabschnitt (98) aufweist, wobei im Zentralsaugabschnitt (98) ausschließlich Saugöffnungen (84) mit dem ersten Öffnungsquerschnitt angeordnet sind und wobei der Mittelsaugabschnitt (92) neben dem Zentralsaugabschnitt (98) zwei an die Endsaugabschnitte (94, 96) angrenzende Übergangssaugabschnitte (100, 102) aufweist, wobei in den Übergangssaugabschnitten (100, 102) ausschließlich oder überwiegend Saugöffnungen (86) mit dem zweiten Öffnungsquerschnitt angeordnet sind.

6. Batteriegreifer (12) nach wenigstens einem der Ansprüche 3 bis 5, **dadurch gekennzeichnet, dass** die Saugseite (54) einen umlaufenden Randsaugabschnitt (104) aufweist, wobei in dem Randsaugabschnitt ausschließlich oder überwiegend Saugöffnungen (84) mit dem ersten Öffnungsquerschnitt angeordnet sind.

7. Batteriegreifer (12) nach wenigstens einem der vorhergehenden Ansprüche, **dadurch gekennzeichnet, dass** im flexiblen Belag (82) zylindrische Ausnehmungen (88, 90) vorgesehen sind, die den flexiblen Belag (82) durchdringen, wobei die Saugöffnungen (84, 86) in die Ausnehmungen (88, 90) münden und wobei die Größe der Ausnehmungen (88, 90) mit der Größe der Saugöffnungen (84, 86) korrespondiert.

8. Batteriegreifer (12) nach Anspruch 7, **dadurch gekennzeichnet, dass** die Ausnehmungen (88, 90) derart ausgebildet sind, dass deren Anzahl, Grundfläche, Geometrie und/oder Tiefe an eine Batterieoberfläche einer anzusaugenden Starterbatterie (26) angepasst ist.

9. Batteriegreifer (12) nach Anspruch 7 oder 8, **dadurch gekennzeichnet, dass** die zylindrischen Ausnehmungen (88, 90) eine kreisförmige oder langlochartige Grundfläche aufweisen.

10. Batteriegreifer (12) nach wenigstens einem der vorhergehenden Ansprüche, **dadurch gekennzeichnet, dass** der Batteriegreifer (12) einen Kupplungsabschnitt zum Anschluss an einen Schlauchheber (16) aufweist, wobei der Kupplungsabschnitt eine Öffnung (36) aufweist, die in die Unterdruckkammer mündet und wobei der Kupplungsabschnitt gleichmäßig um die Öffnung (36) angeordnete Verriegelungszapfen (38) aufweist.

11. Batteriegreifer (12) nach wenigstens einem der vorhergehenden Ansprüche, **dadurch gekennzeichnet, dass** der flexible Belag (82) ein Schaumstoffbelag ist.

12. Batteriegreifer (12) nach wenigstens einem der vorhergehenden Ansprüche, **dadurch gekennzeichnet, dass** das Gehäuse (56) an seiner der Saugseite (54) abgewandten Seite eine Polmarkierung für einen Plus-Pol (68) einer anzusaugenden Starterbatterie (26) aufweist.

13. Batteriegreifer (12) nach wenigstens einem der vorhergehenden Ansprüche, **dadurch gekennzeichnet, dass** das Gehäuse (56) mantelseitig im Bereich des Stegabschnitts (66) und auf der dem Stegabschnitt (66) abgewandten Seite des Balkenabschnitts (64) Mittenmarkierungen (74, 76) aufweist.

14. Batteriegreifer (12) nach wenigstens einem der vorhergehenden Ansprüche, **dadurch gekennzeichnet, dass** mantelseitig Anschlagabschnitte (74, 80) vorgesehen sind, die sich von der Saugseite (54) erheben.

15. Batteriegreifer (12) nach wenigstens einem der vorhergehenden Ansprüche, **dadurch gekennzeichnet, dass** eine mechanische Klemmvorrichtung zur seitlichen Klemmung einer zu handhabenden Starterbatterie (26) vorgesehen ist.

16. Greifsystem (10) umfassend einen Schlauchheber (16), eine Bedienvorrichtung (14) für einen Schlauchheber (16), wenigstens eine erste Unterdruckquelle und einen Batteriegreifer (12) nach wenigstens einem der vorhergehenden Ansprüche, wobei die erste Unterdruckquelle fluidisch mit dem Schlauchheber (16) verbunden ist.

17. Greifsystem (10) nach Anspruch 16, **dadurch gekennzeichnet, dass** die erste Unterdruckquelle fluidisch mit dem Batteriegreifer (12) verbunden ist.

18. Greifsystem (10) nach Anspruch 16 oder 17, **dadurch gekennzeichnet, dass** eine zweite Unterdruckquelle vorgesehen ist, die fluidisch mit dem Batteriegreifer (12) verbunden ist.

## Claims

1. Battery gripper (12) for picking up by suction and handling starter batteries (26) of in particular motor vehicles, comprising a housing (56) in which a vacuum chamber to which a vacuum can be applied is provided and which comprises suction openings (84, 86) on the suction side (54) thereof that faces the starter battery (26) to be picked up by suction, wherein the suction side (54) is associated with a flexible lining (82) for contacting the starter battery (26), wherein the suction side (54) and/or the flexible lining (82) has a T-shaped cross section, wherein the cross section has a bar section (64) and a web section (66) which extends transversely to said bar section (64) such that the web section (66) extends between the battery poles (68, 70) of the starter battery (26) when said starter battery (26) is picked up by suction on the battery gripper (66).

2. Battery gripper (12) according to claim 1, **characterised in that** the suction openings (84, 86) are designed such that the number, opening cross section and/or geometry thereof is adapted to a battery surface of a starter battery (26) to be picked up by suction.

3. Battery gripper according to either claim 1 or claim 2, **characterised in that** suction openings (84, 86) are provided with at least two different opening cross sections, a first opening cross section being smaller than a second opening cross section.

4. Battery gripper (12) according to claim 3, **characterised in that** the suction side (54) has three suction sections (92, 94, 96) in the direction of the bar section (64), there being arranged in a middle suction section (92) approximately the same number of suction openings (84, 86) having the first and having the second opening cross section, and there being arranged in two end suction sections (94, 96) arranged outside the middle suction section (92) only suction openings (86) having the second opening cross section.

5. Battery gripper (12) according to claim 4, **characterised in that** the middle suction section (92) has a central suction section (98), there being arranged in the central suction section (98) only suction openings (84) having the first opening cross section, and the middle suction section (92) having, next to the central suction section (98), two transition suction sections (100, 102) which adjoin the end suction sections (94, 96), there being arranged in the transition suction sections (100, 102) only or predominantly suction openings (86) having the second opening cross section.

6. Battery gripper (12) according to at least one of claims 3 to 5, **characterised in that** the suction side (54) has a peripheral edge suction section (104), there being arranged in the edge suction section only or predominantly suction openings (84) having the first opening cross section.

7. Battery gripper (12) according to at least one of the preceding claims, **characterised in that** cylindrical recesses (88, 90) are provided in the flexible lining (82), which pass through the flexible lining (82), the suction openings (84, 86) leading into the recesses (88, 90), and the size of the recesses (88, 90) corresponding to the size of the suction openings (84, 86).

8. Battery gripper (12) according to claim 7, **characterised in that** the recesses (88, 90) are designed such that the number, base, geometry and/or depth thereof is adapted to a battery surface of a starter battery (26) to be picked up by suction.

9. Battery gripper (12) according to either claim 7 or claim 8, **characterised in that** the cylindrical recesses (88, 90) have a circular or oblong base area.

10. Battery gripper (12) according to at least one of the preceding claims, **characterised in that** the battery gripper (12) has a coupling section for connection to a tube lifter (16), the coupling section comprising an opening (36) which leads into the vacuum chamber, and the coupling section comprising lock studs (38) arranged evenly around the opening (36).

11. Battery gripper (12) according to at least one of the preceding claims, **characterised in that** the flexible lining (82) is a foam lining.

12. Battery gripper (12) according to at least one of the preceding claims, **characterised in that** the housing (56) has, on the side thereof that faces away from the suction side (54), a pole marker for a positive pole (68) of a starter battery (26) to be picked up by suction.

13. Battery gripper (12) according to at least one of the preceding claims, **characterised in that** the housing (56) has centre markers (74, 76) on the lateral face thereof in the region of the web section (66) and on the side of the bar section (64) that faces away from the web section (66) .

14. Battery gripper (12) according to at least one of the preceding claims, **characterised in that** stop sections (74, 80) which project from the suction side (54) are provided on the lateral face.

15. Battery gripper (12) according to at least one of the preceding claims, **characterised in that** a mechanical clamping device for clamping the sides of a starter battery (26) to be handled is provided.

16. Gripping system (10) comprising a tube lifter (16), an operating device (14) for the tube lifter (16), at least a first vacuum source and a battery gripper (12) according to at least one of the preceding claims, wherein the first vacuum source is fluidically connected to the tube lifter (16).

17. Gripping system (10) according to claim 16, **characterised in that** the first vacuum source is fluidically connected to the battery gripper (12).

18. Gripping system (10) according to either claim 16 or claim 17, **characterised in that** a second vacuum source is provided which is fluidically connected to the battery gripper (12).

## Revendications

1. Dispositif de préhension de batterie (12), destiné à attirer par aspiration et à manipuler des batteries de démarrage (26) en particulier de véhicules automobiles, comprenant un boîtier (56), dans lequel est prévue une chambre à vide dans laquelle un vide peut être créé et qui présente sur son côté d'aspiration (54) tourné vers la batterie de démarrage (26) à attirer par aspiration des ouvertures d'aspiration (84, 86), une garniture flexible (82) destinée à être en appui sur la batterie de démarrage (26) étant associée au côté d'aspiration (54), le côté d'aspiration (54) et/ou la garniture flexible (82) présentant une section transversale en forme de T, la section transversale présentant une partie barre (64) et une partie élément jointif (66) s'étendant transversalement à la partie barre (64), de telle manière que la partie élément jointif (66), lorsque la batterie de démarrage (26) est attirée par aspiration sur le dispositif de préhension de batterie (66), s'étend entre les pôles de batterie (68, 70) de la batterie de démarrage (26).

2. Dispositif de préhension de batterie (12) selon la revendication 1, **caractérisé en ce que** les ouvertures d'aspiration (84, 86) sont conçues de telle manière que leur nombre, leur section transversale d'ouverture et/ou leur géométrie sont adaptés à une surface de batterie d'une batterie de démarrage (26) à attirer par aspiration.

3. Dispositif de préhension de batterie selon la revendication 1 ou 2, **caractérisé en ce que** les ouvertures d'aspiration (84, 86) sont pourvues d'au moins deux sections d'ouverture différentes, une première section d'ouverture étant inférieure à une deuxième section d'ouverture.

4. Dispositif de préhension de batterie (12) selon la revendication 3, **caractérisé en ce que** le côté d'aspiration (54) présente en direction de la partie barre (64) trois parties d'aspiration (92, 94, 96), environ le même nombre d'ouvertures d'aspiration (84, 86) présentant la première et la deuxième section d'ouverture étant ménagées dans une partie d'aspiration médiane (92), et seules des ouvertures d'aspiration (86) présentant la deuxième section d'ouverture étant ménagées dans deux parties d'aspiration d'extrémité (94, 96) agencées à l'extérieur de la partie d'aspiration médiane (92).

5. Dispositif de préhension de batterie (12) selon la revendication 4, **caractérisé en ce que** la partie d'aspiration médiane (92) présente une partie d'aspiration centrale (98), seules des ouvertures d'aspiration (84) présentant la première section d'ouverture étant ménagées dans la partie d'aspiration centrale (98) et la partie d'aspiration médiane (92) présentant à côté de la partie d'aspiration centrale (98) deux parties d'aspiration de transition (100, 102) adjacentes aux parties d'aspiration d'extrémité (94, 96), seules des ouvertures d'aspiration (86) présentant la deuxième section d'ouverture, ou principalement celles-ci, étant ménagées dans les parties d'aspiration de transition (100, 102).

6. Dispositif de préhension de batterie (12) selon au moins l'une des revendications précédentes 3 à 5, **caractérisé en ce que** le côté d'aspiration (54) présente une partie d'aspiration marginale (104) périphérique, seules des ouvertures d'aspiration (84) présentant la première section d'ouverture, ou principalement celles-ci, étant ménagées dans la partie d'aspiration marginale.

7. Dispositif de préhension de batterie (12) selon au moins l'une des revendications précédentes, **caractérisé en ce que** des évidements (88, 90) cylindriques, qui traversent la garniture flexible (82), sont ménagés dans la garniture flexible (82), et les ouvertures d'aspiration (84, 86) débouchant dans les évidements (88, 90), et la taille des évidements (88, 90) correspondant à la taille des ouvertures d'aspiration (84, 86).

8. Dispositif de préhension de batterie (12) selon la revendication 7, **caractérisé en ce que** les évidements (88, 90) sont conçus de telle manière que leur nombre, leur surface de base, leur géométrie et/ou leur profondeur sont adaptés à une surface de batterie d'une batterie de démarrage (26) à attirer par aspiration.

9. Dispositif de préhension de batterie (12) selon la revendication 7 ou 8, **caractérisé en ce que** les évidements cylindriques (88, 90) présentent une surface de base circulaire ou du type trou oblong.

10. Dispositif de préhension de batterie (12) selon au moins l'une des revendications précédentes, **caractérisé en ce que** le dispositif de préhension de batterie (12) présente une partie d'accouplement pour le raccordement à un tube de levage (16), la partie d'accouplement présentant une ouverture (36) qui débouche dans la chambre à vide et la partie d'accouplement présentant des tourillons de verrouillage (38) agencés uniformément autour de l'ouverture (36).

11. Dispositif de préhension de batterie (12) selon au moins l'une des revendications précédentes, **caractérisé en ce que** la garniture flexible (82) est une garniture en mousse.

12. Dispositif de préhension de batterie (12) selon au moins l'une des revendications précédentes, **caractérisé en ce que** le boîtier (56) présente sur son côté opposé au côté d'aspiration (54) un marquage de pôle pour un pôle positif (68) d'une batterie de démarrage (26) à attirer par aspiration.

13. Dispositif de préhension de batterie (12) selon au moins l'une des revendications précédentes, **caractérisé en ce que** le boîtier (56) présente côté enveloppe dans la zone de la partie élément jointif (66) et sur le côté de la partie barre (64) opposé à la partie élément jointif (66) des marquages centraux (74, 76).

14. Dispositif de préhension de batterie (12) selon au moins l'une des revendications précédentes, **caractérisé en ce que** des parties de butée (74, 80), qui s'élèvent à partir du côté d'aspiration (54), sont prévues côté enveloppe.

15. Dispositif de préhension de batterie (12) selon au moins l'une des revendications précédentes, **caractérisé en ce qu'**un mécanisme de serrage mécanique est destiné au serrage latéral d'une batterie de démarrage (26) à manipuler.

16. Système de préhension (10) comportant un tube de levage (16), un dispositif de commande (14) pour un tube de levage (16), au moins une première source de vide et un dispositif de préhension de batterie (12) selon au moins l'une des revendications précédentes, la première source de vide étant en liaison fluidique avec le tube de levage (16) .

17. Système de préhension (10) selon la revendication 16, **caractérisé en ce que** la première source de vide est en liaison fluidique avec le dispositif de préhension de batterie (12).

18. Système de préhension (10) selon la revendication 16 ou 17, **caractérisé en ce qu'**une deuxième source de vide est prévue, qui est en liaison fluidique avec le dispositif de préhension de batterie (12).
